# EUROPEAN PATENT APPLICATION

(11) **EP 3 869 896 A1**
(43) Date of publication of application: **25.08.2021**
(21) Application number: 20158243.4
(22) Date of filing: 19.02.2020
(51) Int. Cl.: H04W 72/12

(54) **METHOD FOR SCHEDULING PACKETS FOR TRANSMISSION USING A WIRELESS BASE STATION AND A WIRELESS ACCESS CONTROLLER**

(71) Applicant: Siemens Aktiengesellschaft, 80333 München (DE)
(72) Inventor: Kloiber, Bernhard, 83620 Feldkirchen-Westerham (DE); Richerzhagen, Björn, 85049 Ingolstadt (DE)

(57) **Abstract**

The current invention discloses a method of scheduling packets for transmission using a wireless base station and a wireless access controller. The method comprises receiving a first transmission schedule from a scheduler of the wireless base station, receiving a second transmission schedule from a scheduler of the wireless access controller, and generating a joint transmission schedule based on the first transmission schedule and the second transmission schedule, for coordinated transmission of packets by the wireless base station and the wireless access controller.

## Description

### Background

The current disclosure relates to coordination amongst two or more wireless networks and more particularly, in relation to networks deployed in an industrial environment. Industrial networks comprise a plurality of network devices, servers, automation devices, etc., and are responsible for communication of industrial data in relation to the various processes in the industrial environment. Accordingly, industrial networks have strict requirements in relation network reliability and communication latency.

### Description

With the introduction of 5G NPNs (Non-Public Network), heterogeneous networks involving a plurality of wireless radio networks are expected to play a crucial in industrial communication and automation networks. In factory automation, for instance, 5G telephony is expected to enhance existing (legacy) communication infrastructure. That means 5G may coexist with other existing wireless communication systems.

Especially with 5G NR-U (New Radio Unlicensed), 5G networks will be able to work in unlicensed ISM bands, and thus, it may have to share the wireless radio resources together with WLAN networks existing with the industrial plant. Enabling the use of unlicensed spectrum for 5G in NPNs is highly desirable because there are no additional costs for license fees. Usually such parallel deployments of 5G and WLAN networks using the same shared spectrum would lead to interferences and disturbances and would negatively affect communication latency, reliability, etc.

Conventionally, in the context of cellular mobile communications, such inter-network interreferences have been handled by a plurality of techniques. In one such technique, in order to enable fair coexistence between 4G/5G and WLAN in unlicensed spectrum, Listen Before Talk (LBT) mechanism is utilized (as proposed for NR-U and MuLTEfire). However, usage of LBT does not provide for deterministic communication, and by implication is not well suited for critical communication in relation to industrial control.

Another such technique relates to LTE WLAN Aggregation (LWA). LWA is a feature which has been introduced in 3GPP Rel-13 and primarily follows the LTE DC architecture using a cellular and a non-cellular RAT. Some reference documents include WO2014179319A1, WO2014160763A1. However, within LWA, WLAN cannot operate by its own. The packets transmitted via WLAN are PDCP PDUs encapsulated into the LWAAP (LWA Adaptation Protocol). Thus, WLAN in LWA always requires the LTE part. Accordingly, there is a need for a method and device for joint coordination between 4G/5G and WLAN technology which addresses the aspects mentioned above.

Accordingly, the current disclosure proposes a method of scheduling a plurality of packets for transmission using a wireless base station and a wireless access controller. The method comprises receiving a first transmission schedule from a scheduler of the wireless base station, receiving a second transmission schedule from a scheduler of the wireless access controller, and generating a joint transmission schedule based on the first transmission schedule and the second transmission schedule, for coordinated transmission of packets by the wireless base station and the wireless access controller. The first transmission schedule is generated by the scheduler for transmission of one or more packets associated with the first network. Similarly, the second transmission schedule is generated by the scheduler for transmission of one or more packets associated with the second network.

Accordingly, the disclosed method addresses the issues mentioned above. Accordingly, the method as described above allows for coordination between the wireless base station and the wireless access controller. This allows for reduced interference between the wireless base station and the wireless access controller when using the unlicensed spectrum. Additionally, since the joint transmission schedule is generated based on the first and second transmission schedules, the above mentioned method is applicable to frame based communication protocols.

In an advantageous example, generating the joint transmission schedule comprises detecting one available slot in the first transmission schedule and another available slot in the second transmission schedule; and creating a first slot in the joint transmission schedule based on the one available slot and the another available slot, wherein the first slot is for contention-based communication. Accordingly, based on the requirements associated with the first and second networks and the applications associated with the first and second networks, time slots may be reserved for contention-based communication which may be accommodated during frame scheduling.

In a preferred example, generating the joint transmission schedule comprises allocating a first set of channels to wireless base station and allocating a second set of channels to wireless access controller. Accordingly, the possibility of interference between the wireless base station and the wireless access controller is reduced by ensuring that the channel used for the transmission by the wireless base station are distinct from the channels by the wireless access controller.

In an advantages example, generating the joint transmission schedule comprises detecting one or more potential interferences between one or more transmissions of the wireless base station and the wireless access controller based on the first and second transmission schedules. Based on the detected interferences, the scheduler can resolve the potential interferences by modifying the schedule of the transmissions.

In an example, the plurality of packets includes one or more packets from an industrial network and wherein each packet, from the one or more packets, includes a packet payload associated with a process in an industrial plant. Similarly, generating the joint transmission schedule is based on a transmission criterion associated with one or more packets from the plurality of packets. In an example, the transmission criterion is related to packet redundancy and generating the joint transmission schedule, in accordance with the transmission criteria, includes a first scheduled transmission associated with a first set of packets for transmission using one of the wireless base station and the wireless access controller to a first end device and a second scheduled transmission associated a second set of duplicate packets for transmission using another of the wireless bas station and the wireless access controller to the first end device.

In yet another example, the transmission criterion associated with one or more packets is based on one or more parameters associated with a packet from the one or more packets, wherein one or more parameters associated with the packet includes a packet priority, a packet size, a traffic class of the corresponding packet.

In an embodiment, the method further comprises canceling the second scheduled transmission of the second set of duplicate packets based on an acknowledgment associated with a first set of packets.

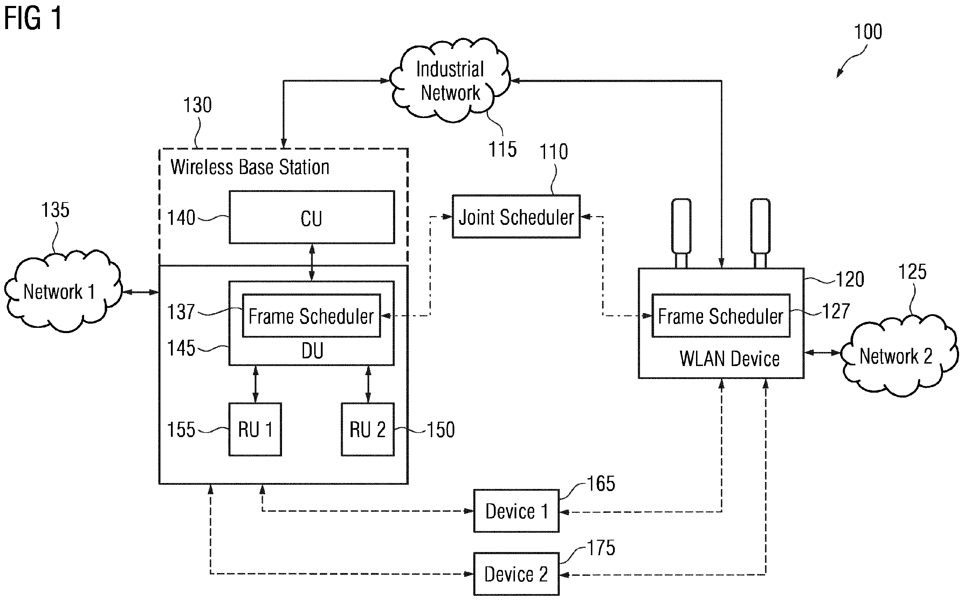

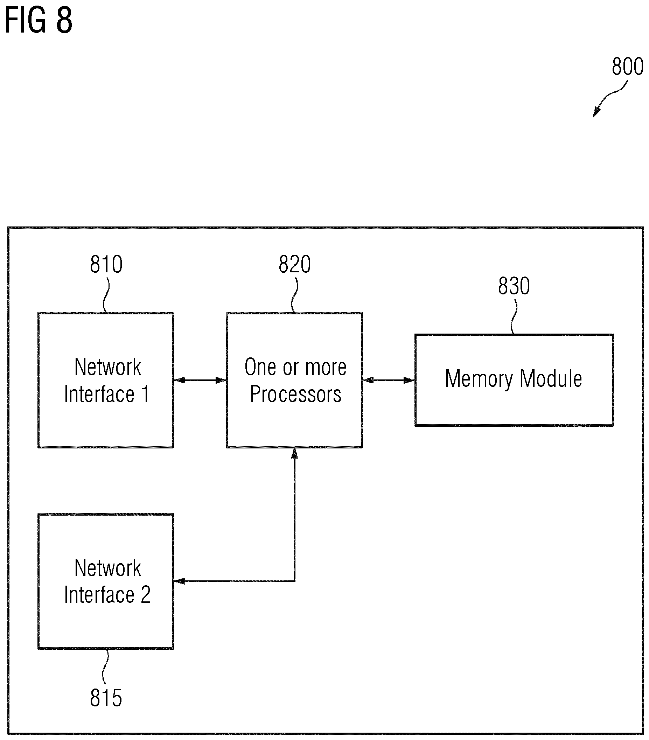

In another aspect, the current disclosure describes a non transitory storage medium for coordinated transmission of a plurality of packets, using a wireless base station of a first network and a wireless access controller of second network. The non transitory storage medium comprising a plurality of instructions, which when executed on one or more processors cause the processors to connect to the wireless base station via a first network interface and to the wireless access controller via a second network interface; receive a first transmission schedule from a scheduler of the wireless base station, wherein the first transmission schedule is generated by the scheduler for transmission of one or more packets associated with the first network; receive a second transmission schedule from a scheduler of the wireless access controller, wherein the second transmission schedule is generated by the scheduler for transmission of one or more packets associated with the second network; and generate a joint transmission schedule based on the first transmission schedule and the second transmission schedule, for coordinated transmission of packets by the wireless base station and the wireless access controller. These aspects are further described in relation figures 1-8.

The following detailed description references the drawings, wherein:
Figure 1 illustrates an example section of an example industrial network comprising a joint scheduler for scheduled coordination between a wireless base station and a wireless access controller;
Figure 2 illustrates an example method for scheduling packets for transmission using a wireless base station and a wireless access controller;
Figure 3 illustrates an example resource allocation table associated with the wireless base station and an example resource allocation table associated with the wireless access controller;
Figure 4 illustrates an example joint resource allocation table generated by the joint scheduler;
Figure 5 illustrates another example joint resource allocation table generated by the joint scheduler;
Figure 6 illustrates an example method for redundant packet transmission using the wireless base station and the wireless access controller;
Figure 7 illustrates an example red box configuration using the wireless base stations and the wireless access controllers;
Figure 8 illustrates an example network device for coordination between the wireless base station and the wireless access controller; and
Figure 9 illustrates example schedules generated by the joint scheduler based on time and frequency resources.

Figure 1 illustrates an example section 100 of an example industrial network in an industrial facility. Industrial facility herein refers to any environment where one or more industrial processes such as manufacturing, refining, smelting, assembly of equipment may take place and includes process plants, oil refineries, automobile factories, etc. The industrial facility may comprise a plurality of control devices connected to a plurality of field devices for monitoring and regulating one or more industrial processes in the industrial facility. Industrial network herein refers to any electronic data network and accordingly includes office campus networks, industrial automation networks, private radio networks, and any other high availability networks where redundancy is critical.

The section 100 comprises a joint scheduler 110 (also referred to as scheduler 110) for scheduling transmission of packets from a section of industrial network 115 to one or more end devices (165, 175) using a wireless base station 130 and a wireless access controller 120. Additionally, the joint scheduler 110 is configured to schedule transmission of packets from a first network 135 and a second network 125 via the wireless base station 130 and wireless access controller 120. The packets from the industrial network 115, are from one or more industrial devices (e.g. control devices, field device, industrial computers, etc.) of the industrial facility. Accordingly, each packet from the packets includes a packet payload associated with a process in the industrial facility (also referred to as industrial plant).

The wireless base station 130 is a part of the first network i.e. a cellular network 135 (shown as network 1). In an example, the wireless base station 130 is a part of a public cellular network. In another example, the wireless base station 130 is a part of a non-public network. The wireless base station 130 comprises a central unit 140, one or more distributed units (shown in figure 1 as distributed unit 145), and one or more radio units (shown in figure 1 as radio units 150, 155). In an example, the central unit 140 processes non-real time protocols and services, and the distributed unit 145 processes physical level protocols and latency-critical real time services. The radio units (150, 155) carry out link layer and physical layer signal processing when transmitting and receiving radio signals. In an example, the connections between the various radio units (155, 165) and the distributed unit 140 are based on ethernet. Similarly, the connection between the distributed unit 145 and the central unit 140 is based on ethernet. In another example, the connections between the various radio units, distributed units and the central unit are based on fiber optic. A plurality of well known protocols (such as CPRI) may be used for communication over these connections. Additionally, the distributed unit 145 includes a frame scheduler 147 for scheduling transmission of packets from the first network 135.

Similarly, the wireless access controller 120 is a part of the second network i.e. a wireless local area network (WLAN network 125, shown in figure as network 2). The wireless access controller 120 includes a frame scheduler 127 for scheduling transmission of packets from the second network 125. Accordingly, the scheduler of the wireless access controller 120 generates and maintains a second transmission schedule for transmission of the packets from the second network 125.

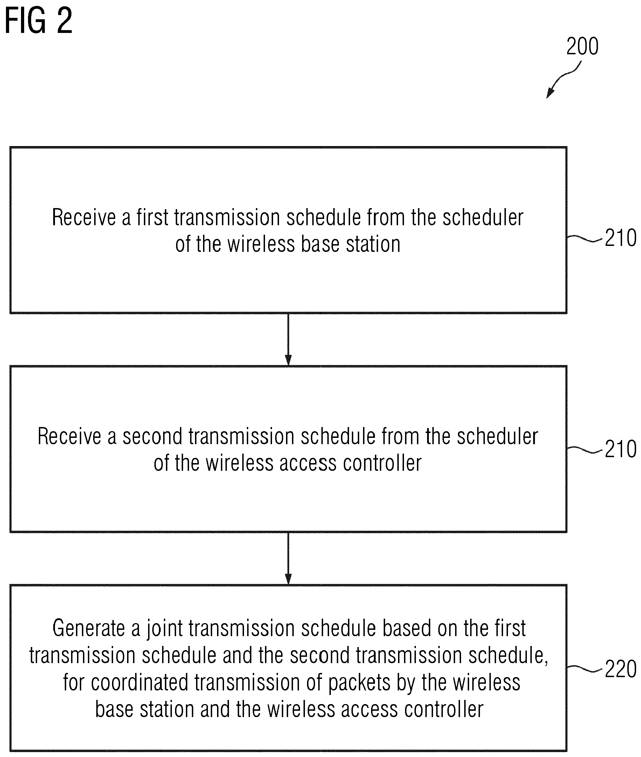

In an example, the joint scheduler 110 is connected to the control planes of the wireless base station 130 and the wireless access controller 120. The industrial network 115 is connected to the data plane of the first and second networks (135 and 125). The joint scheduler 110 is configured to coordinate between the wireless base station 130 and the wireless access controller 120 to ensure coordinated transmission of packets to the one or more end devices (165, 175). This is explained in relation to figure 2.

Figure 2 illustrates a method 200 for scheduling packets for transmission using the wireless base station 130 of the first network 135 and the wireless access controller 120 of the second network 125. The method 200 is realized by the joint scheduler 110.

At step 210, the joint scheduler 110 receives the first transmission schedule the frame schedulers 137 of the wireless base station 130. The first transmission schedule is associated with transmission of one or more packets from the first network 135. The first transmission schedule is indicative of one or more of a transmission priority, transmission interval, a transmission bandwidth associated with a packet from the one or more packets associated with the first network, and a corresponding end device to which a transmission is scheduled. In an example, the first transmission schedule is a resource allocation table including one or more resource reservation blocks against end devices for a period of time. The resource allocation table is generated by the scheduler 137 based on the packets to be sent to the end devices from the first network 135.

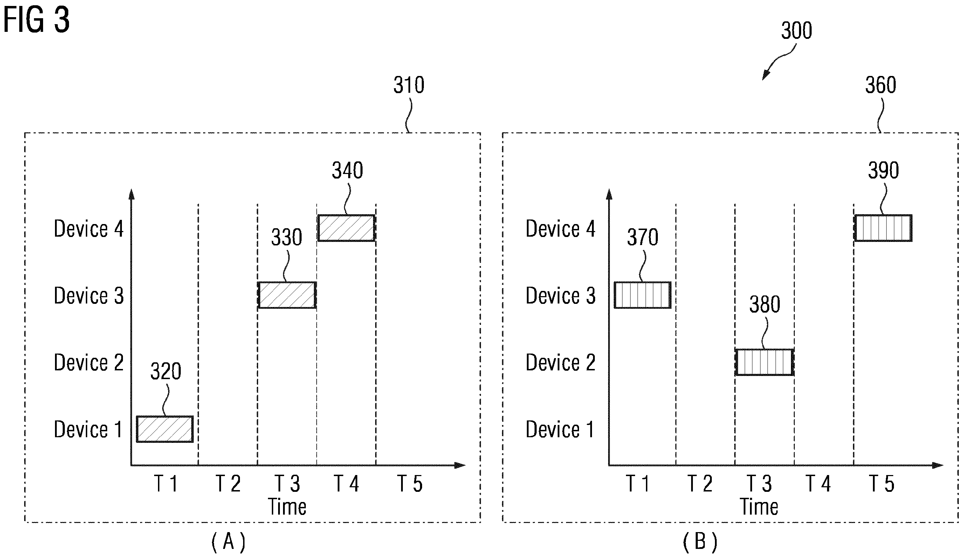

An example first transmission schedule is illustrated in section A of figure 3. The first transmission schedule 310 is generated for reservation of resources against four devices (shown as devices 1,2,3 and 4 in the schedule or table 310). The first transmission schedule 310 comprises five time slots T1, T2, T3, T4 and T5. In the first time slot T1, the radio resources of the wireless base station 130 are reserved for transmission of a first group of packets (having high priority) from the first network against Device 1. This is shown using resource reservation block 320. In the second time slot T2, there are no reservations as no transmissions are to be scheduled. In the third time slot T3, the radio resources of the wireless base station 130 are reserved for transmission of a second group of packets (having low priority) from the first network against Device 3. This is shown using resource reservation block 330. In the fourth time slot T4, the radio resources of the wireless base station 130 are reserved for transmission of a third group of packets (having low priority) from the first network against Device 4. This is shown using resource reservation block 340. In the fifth time slot T5, there are no reservations as no transmissions are to be scheduled.

At step 220, the joint scheduler 110 similarly receives the second transmission schedule the frame schedulers 127 of the wireless access controller 120. The second transmission schedule is associated with transmission of one or more packets from the second network 125. Similarly, the second transmission schedule is associated with transmission of one or more packets from with the second network 125. Similarly, the second transmission schedule is indicative of one or more of a transmission priority, transmission interval, a transmission bandwidth associated with a packet from the one or more packets associated with the second network 125, and a corresponding end device to which a transmission is scheduled. In an example, the second transmission schedule is a resource allocation table including one or more resource reservation blocks against end devices for a period of time. The resource allocation table is generated based on the packets to be sent to the end devices from the second network 125.

An example second transmission schedule is illustrated in section B of figure 3. The second transmission schedule 360 is generated for reservation of resources against four devices (shown as devices 1,2,3 and 4 in the schedule or table 360). The second transmission schedule 360 comprises five time slots T1, T2, T3, T4 and T5. In the first time slot T1, the radio resources of the wireless access controller 120 are reserved for transmission of a fourth group of packets (having high priority) from the second network against Device 3. This is shown using resource reservation block 370. In the second time slot T2, there are no reservations as no transmissions are to be scheduled. In the third time slot T3, the radio resources of the wireless access controller 120 are reserved for transmission of a fifth group of packets (having medium priority) from the second network against Device 2. This is shown using resource reservation block 380. In the fourth time slot T4, there are no reservations as no transmissions are to be scheduled. In the fifth time slot T5, the radio resources of the wireless access controller 120 are reserved for transmission of a sixth group of packets (having low priority) from the second network against Device 4. This is shown using resource reservation block 390.

At step 230, the scheduler 110 generates a joint transmission schedule based on the first transmission schedule, the second transmission schedule, for coordinated transmission of packets by the wireless base station (130) and the wireless access controller (120). The scheduler 110 analyses the transmissions scheduled in the first transmission schedule and the transmissions scheduled in the second transmission schedule and generates the joint transmission schedule to ensure that the above-mentioned transmissions in the first and second transmission schedules are coordinated.

In an example, while generating the joint transmission schedule 400, the scheduler 110 detects one available slot in the first transmission schedule 310 and another available slot in the second transmission schedule 360. Then the scheduler 110 creates a first slot in the joint transmission schedule 400 based on the one available slot and another available slot, wherein the first slot is for contention-based communication.

While generating the joint transmission schedule, the scheduler 110 is configured to detect one or more potential interferences between one or more transmissions of the wireless base station 130 and the wireless access controller 120 based on the first and second transmission schedule (310 and 360).

For example, the scheduler of the network device 110 can analyze the first transmission schedule 310 and the second transmission schedule 360 and detect a potential interference in time slots T1 and T3. Since, in time slot T1, a potential transmission from wireless base station 130 to the device 1 and potential transmission from the wireless access controller 120 to the device 3 are scheduled, a potential interference may occur. Similarly, since, in time slot T3, a potential transmission from wireless base station 130 to the device 3 and potential transmission from the wireless access controller 120 to the device 2 are scheduled, a potential interference may occur. Accordingly, while generating the joint transmission schedule 400, the scheduler of the network device 110, avoids the potential interference by ensuring that only one of the wireless base station 130 or wireless access controller 120 is transmitting in a particular time slot.

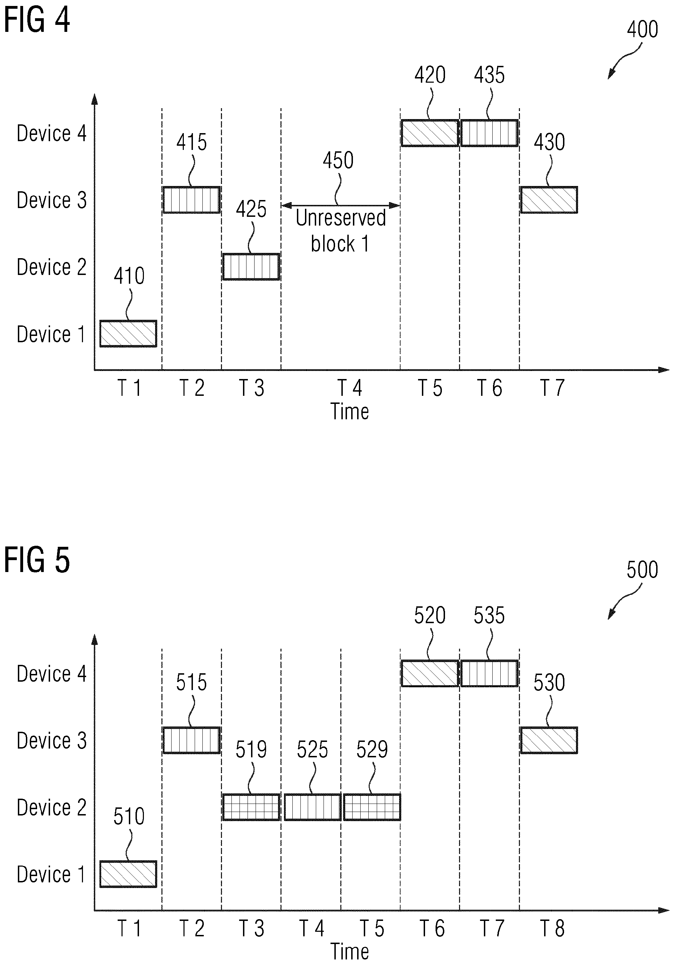

While the above example is explained using potential interference due to transmissions in the same time slot, the scheduler of the device 110 is configured to detect conflicting transmissions in the same time slot to the same end device or using the same radio resources. Accordingly, in the case of conflict in relation to frequency resources, the scheduler can schedule transmission of the base station on a first frequency and transmission of the wireless access controller on a second frequency in the same time slot. This is illustrated in relation to figure 4.

Figure 4 illustrates a joint transmission schedule 400. The joint transmission schedule 400 is generated based on the first transmission schedule 310, and the second transmission schedule 360. The joint transmission schedule 400 is generated for reservation of resources against four devices (shown as devices 1,2,3 and 4 in the schedule or table 400). The joint transmission schedule 400 comprises seven time slots T1, T2, T3, T4, T5, T6 and T7. The joint transmission schedule further comprises of resource reservation blocks (shown as blocks 410, 415, 425, 420, 435, 430). Resource reservation blocks 410, 420, 430 are associated with packet transmission from network 1 (illustrated in the figure as blocks with angular hatching). Similarly, resource reservation blocks 415, 425, 435 are associated with packet transmission from network 2 (illustrated in the figure as blocks with vertical shading).

As mentioned previously, the joint transmission schedule 400 is generated by the scheduler 110. Continuing the example, the scheduler 110 analyses the first transmission schedule 310 and the second transmission schedule 360. The scheduler 110 detects one or more available slots where no reservations have been made. For example, by analyzing the first and second transmission schedules 310 and 360, the scheduler of the device 110 identifies slots T2 and T5 as available in the first transmission schedule 310 and slots T2 and T4 as available in the second transmission schedule 360. Then, the scheduler 110 checks the priority of the groups of packets for which resources are reserved. In the current example, a high, medium low priority scheme is used for scheduling the transmission of packets.

Accordingly, the scheduler 110 compares the priority of the packets of the first network 135 with the packets from the second network 125. Based on the check of priorities and available time slots, the scheduler 110 reserves resources of the wireless base station for transmission of first group of packets from the first network to the device 1, since the first group of packets has high priority. This is shown as resource reservation block 410. Then, the scheduler 110 reserves resources of the wireless access controller for transmission of fourth group of packets from the second network to the device 3, since the fourth group of packets has high priority. This is shown as resource reservation block 415. Then, the scheduler 110 reserves resources of the wireless access controller for transmission of fifth group of packets from the second network to the device 2, since the fifth group of packets has medium priority. This is shown as resource reservation block 425. Then based on the available slots T2 and T5 in first transmission schedule 310 and available slots T2 and T4 in the second transmission schedule 350, the scheduler creates an unreserved block (shown as block 450) in time slot T4. Since there are two available slots in both the transmission schedule, time slot t4 is of longer duration than the other time slots. Then, the second group of packets from first network, sixth group of packets from the second network and third group of packets from the first network are then scheduled by reserving resources in the remaining time slots (shown as blocks 420, 435, 430).

Then, the scheduler schedules the transmission of the plurality of packets of the industrial network 115 on the wireless base station 130 and the wireless access controller 120 based on the generated joint transmission schedule 400.

Continuing the above example, the scheduler of the network device 110 transmits the joint transmission schedule 400 to wireless base station 130 and the wireless access controller 120.

In an example, the joint scheduler 110 generates the joint transmission schedule based on a transmission criteria associated with one or more packets from one of the first, second or industrial networks (135, 125, 115). Transmission criteria herein refers to a configuration or scheme according to which transmission of the packet is performed by either of the wireless base station 130 or the wireless access controller 120. In an example, the transmission criterion associated with one or more packets is based on one or more parameters associated with a packet from the one or more packets. Examples of the one or more parameters includes a packet priority, a packet size, a traffic class of the corresponding packet. These aspects are further explained in relation to figure 5.

Figure 5 illustrates an example joint transmission schedule 500 generated by the scheduler 110. The joint transmission schedule 500 is generated based on the first transmission schedule 310, the second transmission schedule 360 and the transmission criteria associated with the one or more packets from the plurality of packets from the industrial network 115. The joint transmission schedule 500 is generated for reservation of resources against four devices (shown as devices 1,2,3 and 4 in the schedule or table 500). The joint transmission schedule 500 comprises eight time slots T1, T2, T3, T4, T5, T6, T7 and T8. The joint transmission schedule further comprises of resource reservation blocks (shown as blocks 510, 515, 519, 525, 529, 520, 535, 530). Resource reservation blocks 510, 520, 530 are associated with packet transmission from network 1 (illustrated in the figure as blocks with angular hatching). Similarly, resource reservation blocks 515, 525, 535 are associated with packet transmission from network 2 (illustrated in the figure as blocks with vertical shading). Additionally, resource reservation blocks 519, and 529 are associated with packet transmission (i.e. the plurality of packets) from industrial network 115 (illustrated in the figure as blocks with cross hatching).

As mentioned previously, the joint transmission schedule 500 is generated by the scheduler 110. Continuing the example, the scheduler 110 analyses the first transmission schedule 310 and the second transmission schedule 360. The scheduler 110 detects one or more available slots where no reservations have been made. For example, by analyzing the first and second transmission schedules 310 and 360, the scheduler of the device 110 identifies slots T2 and T5 as available in the first transmission schedule 310 and slots T2 and T4 as available in the second transmission schedule 360. Then, the scheduler 110 checks the priority of the groups of packets for which resources are reserved, against the priority of the plurality of packets from the industrial network 115. In the current example, the transmission criteria associated with one or more packets from plurality of packets from industrial networks, is a transmission priority (also referred to as priority) associated with each packet. In the current example, a high, medium low priority scheme is used for scheduling the transmission of packets.

Accordingly, the scheduler 110 compares the priority of the first, second and third group of packets (of the first network) with the priority of the plurality of packets from the industrial network 115. Similarly, the scheduler 110 compares the priority of the fourth, fifth and sixth group of packets (of the first network) with the priority of the plurality of packets from the industrial network 115. In current example, the plurality of packets from the industrial networks (for simplicity referred to as industrial packets) comprises a first sub-group of industrial packets of medium priority and a second sub-group of industrial packets of medium priority. Based on the check of priorities and available time slots, the scheduler 110 reserves resources of the wireless base station for transmission of first group of packets from the first network to the device 1, since the first group of packets has high priority. This is shown as resource reservation block 510. Then, the scheduler 110 reserves resources of the wireless access controller for transmission of fourth group of packets from the second network to the device 3, since the fourth group of packets has high priority. This is shown as resource reservation block 515. Then, the scheduler 110 reserves resources of the wireless base station for transmission of first sub-group of industrial packets from the industrial network to the device 2, since the first sub-group of packets has medium priority. This is shown as resource reservation block 519. Then, the scheduler 110 reserves resources of the wireless access controller for transmission of fifth group of packets from the second network to the device 2, since the fifth group of packets has medium priority. This is shown as resource reservation block 525. Then, the scheduler 110 reserves resources of the wireless access controller for transmission of second sub-group of industrial packets from the industrial network 115 to the device 2, since the first sub-group of packets has medium priority. This is shown as resource reservation block 529. Then, the second group of packets from first network, sixth group of packets from the second network and third group of packets from the first network are then scheduled by reserving resources in the remaining time slots (shown as blocks 520, 535, 530).

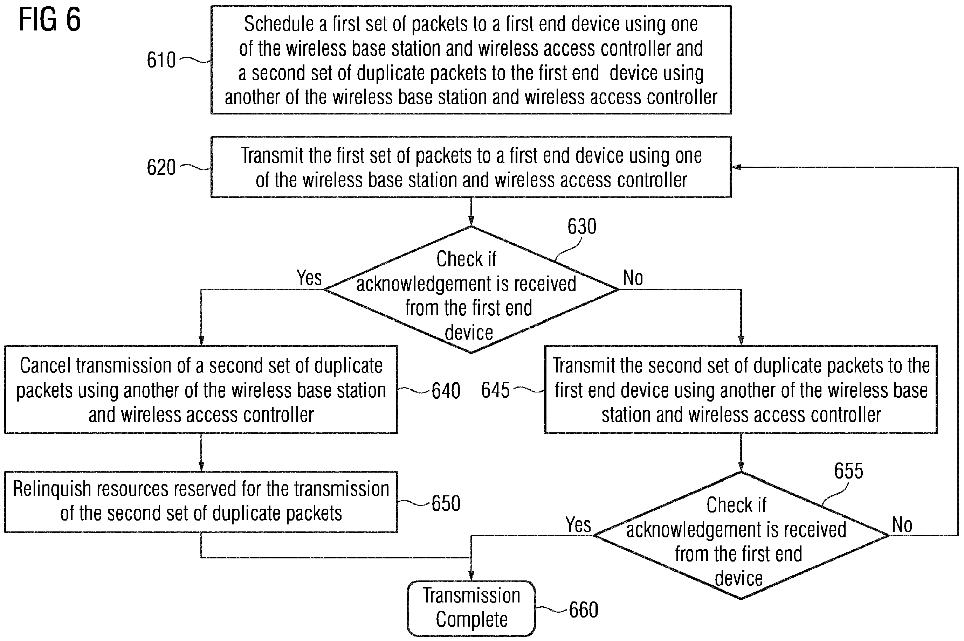

In an embodiment, the scheduler 110 is capable of providing packet redundancy for the industrial packets. This is further explained in reference to figure 6.

Figure 6 illustrates an example method 600 for redundant packet transmission using the wireless base station 130 and the wireless access controller 120. In the current example, for one or more packets associated with the plurality of packets from the industrial network 115, the transmission criterion is indicative of packet redundancy requirement associated with the one or more packets. In other words, for each packet from the one or more packets, two equivalent packets are transmitted to the recipient end device via two separate communication paths.

Accordingly, the scheduler 110 in accordance with the transmission criteria of the one or more packets, is configured to duplicate the one or more packets marked for packet redundancy and create a first set of duplicate packets and a second set of duplicate packets. Then, at step 610 the scheduler of the device 110 schedules the first set of (duplicate) packets for transmission using one of the wireless base station 130 and the wireless access controller 120 to a first end device 165 and a second set of duplicate packets for transmission using another of the wireless bas station 130 and the wireless access controller 120 to the first end device 165.

Then, at step 620, the first set of packets is transmitted using one of the wireless base station (130) and the wireless access controller (120) to a first end device (165) over a first frequency spectrum. Subsequent to the transmission of the first set of packets via one of the wireless base station 130 and the wireless access controller, at step 630 the scheduler of the device 110, checks to see if an acknowledgement of the transmission of the first set of (duplicate) packets has been received from the first end device. If the acknowledgment has been received from the first end device, then at step 640, the scheduler of the device 110 cancels the scheduled transmission of the second set of duplicate packets via the other of the wireless base station 130 and the wireless access controller 120. Then at step 650, the scheduler of device 110 relinquishes the resource reservations made at the other of wireless base station 130 and the wireless access control 120. The relinquished radio resources may be then used by the other of the wireless base station 130 or the wireless access controller to schedule and transmit packets from its corresponding network (i.e. the first network for the wireless base station and the second network for the wireless access controller). Then the transmission of the one or more packets is deemed complete at step 660.

If the acknowledgement is not received, then at step 645, the scheduled transmission of the second set of duplicate packets happens via the other of the wireless base station 130 or the wireless access controller 120. Then at step 655, the scheduler again checks if an acknowledgement has been received for either the first set of duplicate packets or the second set of duplicate packets from the first end device. If an acknowledgment has been received, then the transmission of the one or more packets is deemed complete at step 660. If no acknowledgement has received, the scheduler restarts the method 600 and attempts to retransmit the first set of packets.

In an example, the second set of duplicate packets scheduled to be transmitted using another of the wireless base station (130) and the wireless access controller (120) to a first end device (165) over a second frequency spectrum different from a first frequency spectrum (associated with the transmission of the first set of packets) to improve packet delivery.

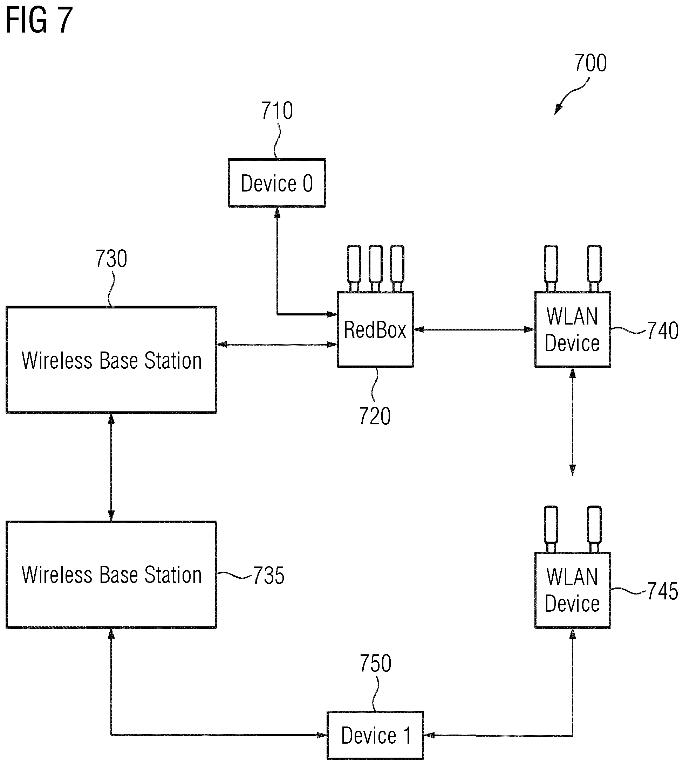

The method 600 may be realized in a red box device or a gateway device. For example, the above-mentioned method may be realized in a red box device 720 as shown in figure 7. The figure 7 illustrates a section of the industrial network comprising an industrial device 710 which is incapable of supporting a redundancy configuration. The industrial network 710 is connected to an end device 750 via the red box device 720, one or more base stations (730, 735) and one or more wireless access controllers (740, 745).

The present disclosure can take a form of a computer program product comprising program modules accessible from computer-usable or computer-readable medium storing program code for use by or in connection with one or more computers, processing units, or instruction execution system. For example, the scheduler 110 may be realized across one or more devices. For example, accordingly, the current disclosure as describes a gateway device 800. The device 800 implements the scheduler 110. The network device 800 includes two or more network interfaces 810 and 815, one or more processors 820 and a non-transitory storage medium 830. The non-transitory storage medium 830 contains a plurality of instructions for implementing the scheduler 110.

Upon execution of the instructions in the memory module 830, the one or more processors 820 connects to the wireless base station 130 via a first network interface 810 and to the wireless access controller 120 via a second network interface 815. Then, the one or more processors 820 receives the first transmission schedule associated with the wireless base station and the second transmission schedule from the wireless access controller. Then, the one or more processors 820 generate the joint transmission schedule based on the first transmission schedule, and the second transmission schedule. Then, the one or more processors 820 schedule transmission of a first set of packets on the wireless base station and a second set of packets on the wireless access controller based on the generated joint transmission schedule.

For the purpose of this description, a computer-usable or computer-readable non-transitory storage medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processing units and program code for implementing each aspect of the technology can be centralized or distributed (or a combination thereof) as known to those skilled in the art.

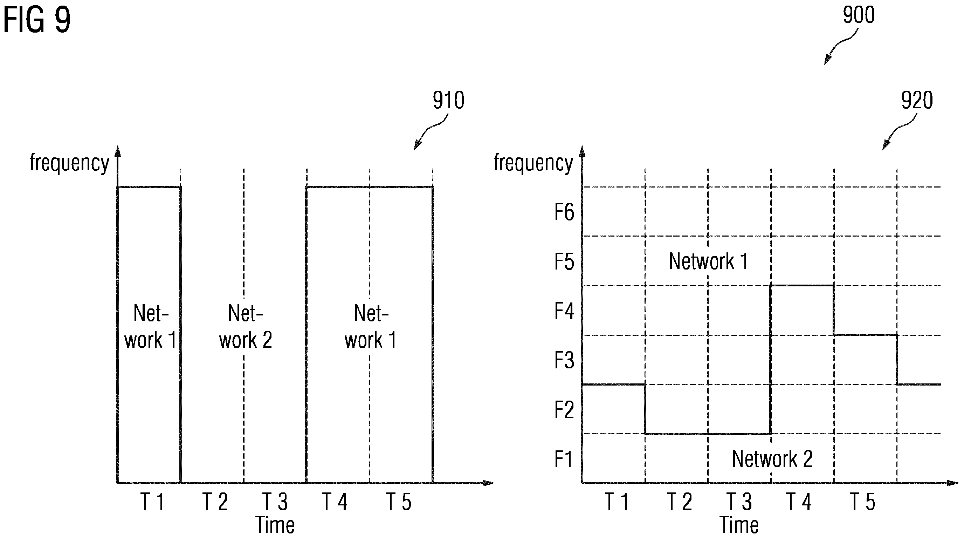

While the above disclosure is described using one or more examples in relation to time based scheduling, the above mentioned method may be applied for frequency based scheduling and a combination of time and frequency based scheduling. This is further explained using figure 9.

Figure 9 illustrates a first schedule 910 and a second schedule 920. The above shown schedules 910 and 920 are generated by the method described above using the first and second schedules from the seconders of the networks. The first schedule 910 is a time based schedule. The first schedule 910 comprises a plurality of time slots (shown as time slots T1, T2, T3, T4, and T5). The entire frequency spectrum is undivided and is allocated to packets from either network during a particular time slot. As shown in the schedule 910, in the time slot T1, the frequency spectrum is allocated to network 1. Then, in time slots T2 and T3, the frequency spectrum is allocated to network 2. Then, in time slots T4 and T5, the frequency spectrum is allocated to network 1.

The second schedule 920 is based on a combination of frequency and time based scheduling. The second schedule 920 comprises a plurality of time slots (shown as time slots T1, T2, T3, T4, and T5) and a plurality of frequency ranges (shown as ranges F1, F2, F3, F4, F5 and F6). The entire frequency spectrum is divided into the six frequency ranges. Accordingly, packets from either network may be transmitted using one or more frequency ranges in a particular time slot.

As shown in the schedule 910, in the time slot T1, the frequency ranges F3, F4, F5 and F6 are allocated to network 1 and ranges F1 and F2 are allocated to network 2. Then, in time slots T2 and T3, the frequency ranges F2, F3, F4, F5 and F6 are allocated to network 1 and ranges F1 are allocated to network 2. Then, in time slot T4, the frequency ranges F5 and F6 are allocated to network 1 and ranges F1, F2, F3 and F4 are allocated to network 2. Then, in time slot T5, the frequency ranges F4, F5 and F6 are allocated to network 1 and ranges F1, F2, and F3 are allocated to network 2.

While the current disclosure is described with references to few industrial devices, a plurality of industrial devices may be utilized in the context of the current disclosure. While the present disclosure has been described in detail with reference to certain embodiments, it should be appreciated that the present disclosure is not limited to those embodiments. In view of the present disclosure, many modifications and variations would be present themselves, to those skilled in the art without departing from the scope of the various embodiments of the present disclosure, as described herein. The scope of the present disclosure is, therefore, indicated by the following claims rather than by the foregoing description. All changes, modifications, and variations coming within the meaning and range of equivalency of the claims are to be considered within their scope. All advantageous embodiments claimed in method claims may also be applied to device/non transitory storage medium claims.

## Claims

1. A method (200) of scheduling a plurality of packets for transmission using a wireless base station (130) and a wireless access controller (120), the method (200) comprising:
a. receiving (210) a first transmission schedule (310) from a scheduler (137) of the wireless base station (130), wherein the first transmission schedule (310) is generated by the scheduler (137) for transmission of one or more packets associated with the first network (135);
b. receiving (220) a second transmission schedule (360) from a scheduler (127) of the wireless access controller (120), wherein the second transmission schedule (360) is generated by the scheduler (127) for transmission of one or more packets associated with the second network (125);
c. generating (230) a joint transmission schedule (400) based on the first transmission schedule (310) and the second transmission schedule (360), for coordinated transmission of packets by the wireless base station (130) and the wireless access controller (120).

2. The method (200) as claimed in claim 1, wherein generating the joint transmission schedule (400) comprises detecting one available slot in the first transmission schedule (310) and another available slot in the second transmission schedule (360); and creating a first slot in the joint transmission schedule (400) based on the one available slot and the another available slot, wherein the first slot is for contention-based communication.

3. The method (200) as claimed in claim 1, wherein generating the joint transmission schedule (400) comprises allocating a first set of channels to wireless base station (130) and allocating a second set of channels to wireless access controller (120).

4. The method (200) as claimed in claim 1, wherein generating the joint transmission schedule (400) comprises detecting one or more potential interferences between one or more transmissions of the wireless base station (130) and the wireless access controller (120) based on the first and second transmission schedules (310, 360).

5. The method (200) as claimed in claim 1, wherein the plurality of packets includes one or more packets from an industrial network (115) and wherein each packet, from the one or more packets, includes a packet payload associated with a process in an industrial plant.

6. The method (200) as claimed in claim 1, wherein generating the joint transmission schedule (400) is based on a transmission criterion associated with one or more packets from the plurality of packets.

7. The method (200) as claimed in claim 6, wherein the transmission criterion is related to packet redundancy and wherein the method (200) further comprises scheduling , in accordance with the transmission criteria, a first transmission associated with a first set of packets for transmission using one of the wireless base station (130) and the wireless access controller (120) to a first end device (165) and scheduling a second transmission associated with a second set of duplicate packets for transmission using another of the wireless bas station (130) and the wireless access controller (120) to the first end device (165).

8. The method (200) as claimed in claim 6, wherein the transmission criterion associated with one or more packets is based on one or more parameters associated with a packet from the one or more packets, wherein one or more parameters associated with the packet includes a packet priority, a packet size, a traffic class of the corresponding packet.

9. The method (200) as claimed in claim 7, wherein the method (200) further comprises cancelling the scheduled second transmission based on an acknowledgment associated with a first set of packets.

10. A non transitory storage medium for coordinated transmission of a plurality of packets, using a wireless base station (130) of a first network (135) and a wireless access controller (120) of second network (125), the non transitory storage medium comprising a plurality of instructions, which when executed on one or more processors cause the processors to:
a. connect to the wireless base station (130) via a first network interface (810) and to the wireless access controller (120) via a second network interface (815);
b. receive a first transmission schedule (310) from a scheduler (137) of the wireless base station (130), wherein the first transmission schedule (310) is generated by the scheduler (137) for transmission of one or more packets associated with the first network (135);
c. receive (220) a second transmission schedule (360) from a scheduler (127) of the wireless access controller (120), wherein the second transmission schedule (360) is generated by the scheduler (127) for transmission of one or more packets associated with the second network (125); and
d. generate (230) a joint transmission schedule (400) based on the first transmission schedule (310) and the second transmission schedule (360), for coordinated transmission of packets by the wireless base station (130) and the wireless access controller (120).
